**Europäisches Patentamt**

**European Patent Office**

**Office européen des brevets**

(11) Veröffentlichungsnummer: **0 253 019**

**A1**

## (12) EUROPÄISCHE PATENTANMELDUNG

(21) Anmeldenummer: **86114651.2**

(51) Int. Cl.⁴: **B62J 5/06**

(22) Anmeldetag: **22.10.86**

(30) Priorität: **12.07.86 DE 3623605**

(43) Veröffentlichungstag der Anmeldung:
**20.01.88 Patentblatt 88/03**

(84) Benannte Vertragsstaaten:
**AT BE CH DE ES FR GB GR IT LI LU NL SE**

(71) Anmelder: **Schürmann, Dieter**
**Lessing Strasse 2**
**4800 Bielefeld 1(DE)**

Anmelder: **Gudereit, Bernd**
**Hörster Strasse 30**
**4800 Bielefeld 18(DE)**

(72) Erfinder: **Schürmann, Dieter**
**Lessing Strasse 2**
**4800 Bielefeld 1(DE)**
Erfinder: **Gudereit, Bernd**
**Hörster Strasse 30**
**4800 Bielefeld 18(DE)**

(74) Vertreter: **Hanewinkel, Lorenz, Dipl.-Phys.**
**Patentanwalt Ferrariweg 17a**
**D-4790 Paderborn(DE)**

(54) **Dynamomaschine für/an Fahrräder.**

(57) Die Dynamomaschine für/an Fahrräder weist ein am Fahrrad festlegbares, einen Stator (2) und einen Rotor (3) aufnehmendes Gehäuse (1) auf; der Rotor (3) ist von einem Antriebsteil (4), welches von einen Fahrrad-Rad antreibbar ist, in Drehbewegung versetzbar.

Das Antriebsteil (4) ist dabei um eine Radachse (6) mit dem Rad bewegungsmäßig verbindbar drehbar gelagert und bildet ein Teil eines den Rotor (3) in Abhängigkeit von der Raddrehung verdrehenden, ein-und ausschaltbaren Getriebes (7) der Dynamomaschine.

Die Dynamomaschine ist mit ihrem Antriebsteil (4) koaxial zu der Radachse (6) angeordnet und auf der Radachse (6) verdrehfest gelagert, wobei der Stator (2) und Rotor (3) exzentrisch zur Radachse (6) liegen.

Das als umlaufender Gehäusedeckel ausgebildete Antriebsteil (4) hat ein Ein-und Ausschaltorgan (22) mit einem zwischen die Radspeichen zur Bewegungsübertragung einschiebbaren Mitnehmer (38).

Fig.6

## Dynamomaschine für/an Fahrräder

Die Erfindung bezieht sich auf eine Dynamomaschine für/an Fahrräder, mit einem am Fahrrad festlegbaren, einen Stator und einen Rotor aufnehmenden Gehäuse, wobei der Rotor von einem Antriebsteil in Drehbewegung versetzbar ist, welches von einem Fahrrad-Rad antreibbar ist.

Derartige bekannte Dynamos werden an der Fahrradgabel befestigt und haben als Antriebsteil ein Rädchen, welches sich an der Bereifung abwälzt. Nachteilig hierbei ist es, daß durch Verschmutzung oder durch Schnee und Eis vielfach eine Verdrehung des Rädchens nicht erfolgt, sondern dieses an der Bereifung entlangrutscht, so daß keine Stromerzeugung erfolgen kann. Auch besteht die Möglichkeit, daß der Dynamo sich in seiner Befestigung an der Radgabel lockert und dann zwischen die Speichen gerät, was zu Unfällen führt.

Weiterhin sind Dynamos bekannt, die eine breite Druckrolle als Antriebsteil aufweisen, die sich ebenfalls auf der Bereifung abwälzt. Hier bestehen ebenfalls Nachteile des Rutschens und der mangelnden Stromerzeugung.

Außerdem können die sich an der Bereifung abwälzenden Antriebsteile bei längerem Gebrauch eine Beschädigung der Bereifung hervorrufen.

Aufgabe der Erfindung ist es, eine einfach und kostensparend aufgebaute Dynamomaschine zu - schaffen, die einerseits lagesicher am Fahrrad festlegbar ist und andererseits eine dauerhaft sichere und optimale Bewegungsübertragung vom Fahrrad-Rad außerhalb der Bereifung für die Stromerzeugung erhält.

Diese Aufgabe wird erfindungsgemäß durch die kennzeichnenden Merkmale des Patentanspruches 1 gelöst, wobei noch die in den Unteransprüchen aufgeführten Gestaltungsmerkmale vorteilhafte Weiterbildungen der Aufgabenlösung darstellen.

Der Gegenstand der Erfindung erstreckt sich nicht nur auf die Merkmale der einzelnen Ansprüche, sondern auch auf deren Kombination.

Die erfindungsgemäße Dynamomaschine ist einfach und kostensparend aufgebaut und läßt sich in einfacher Weise lagegesichert am Fahrrad festlegen. In bevorzugter Weise wird die Dynamomaschine auf eine Radachse, vorzugsweise die Vorderradachse, des Fahrrades aufgesteckt und stellt dann praktisch eine Achs-Lichtmaschine dar.

Für die Drehbewegungsübertragung vom Rad auf den Rotor ist auf die Radachse ein Antriebsteil, vorzugsweise Zahnrad oder umlaufender Gehäusedeckel, zentrisch aufgesteckt und mit dem Rad fest verbunden oder mit den Radspeichen über einen Ein-und Ausschaltmechanismus bewegungsmäßig verbindbar, und dieses Antriebsteil gibt seine vom Radlauf bestimmte Drehbewegung über ein Getriebe auf den Rotor, der koaxial oder exzentrisch zur Radachse liegt, ab, so daß die Drehbewegungsübertragung außerhalb der Bereifung erfolgt und somit durch äußere Einflüsse, wie Schmutz, Schnee, Eis, nicht beeinträchtigt wird, da durch die verdrehfeste Verbindung von Antriebsteil und Rad keine Rutsch-oder Gleitbewegungen entstehen können.

Das Antriebsteil mit Getriebe, Stator und Rotor sind in einem Gehäuse nach außen hin abgedichtet untergebracht und bilden mit dem Gehäuse eine kompakte Baueinheit.

Die Dynamomaschine läßt sich durch Aufstecken auf die Radachse und in Verbindung mit der Radgabel verdrehfest am Fahrrad lagern. Weiterhin besteht auch die Möglichkeit, die Dynamomaschine außerhalb der Radachse an der Radgabel anzubringen, wobei dann ihr Getriebe ebenfalls mit dem auf der Radachse sitzenden Antriebsteil in Verbindung steht.

Die Dynamomaschine ist ohne weiteres an jedem Fahrrad leicht nachrüstbar.

Anhand der Zeichnungen werden nachfolgend Ausführungsbeispiele gemäß der Erfindung näher erläutert. Es zeigt:

Fig. 1 eine perspektivische Ansicht eines Fahrrades mit auf der Vorderradachse angeordneter Dynamomaschine,

Fig. 2 einen senkrechten Schnitt durch die auf der Radachse angeordnete Dynamomaschine,

Fig. 3 einen waagerechten Schnitt durch dieselbe Dynamomaschine,

Fig. 4 eine Seitenansicht einer Dynamomaschine in weiterer Ausführung und in der an der Vorderradachse montierten Stellung,

Fig. 5 eine Stirnansicht der Dynamomaschine nach Fig. 4 und

Fig. 6 einen senkrechten Halbschnitt durch dieselbe Dynamomaschine.

Mit 1 ist ein Gehäuse einer Dynamomaschine für/an Fahrräder bezeichnet, in dem ein Stator (2) und ein Rotor (3) koaxial oder exzentrisch zu einer Radachse (6), vorzugsweise der Vorderradachse, untergebracht sind, wobei der Rotor (3) von einem Antriebsteil (4) in Drehbewegung versetzbar ist und wobei dieses Antriebsteil (4) seine Drehbewegung von einem Fahrrad-Rad (5) erhält.

Das Antriebsteil (4) ist um die Radachse (6) mit dem Rad (5) fest verbunden oder bewegungsstarr verbindbar drehbar gelagert und bildet einen Teil eines den Rotor (3) in Abhängigkeit von der Raddrehung verdrehenden, ein-und ausschaltbaren Getriebe (7) der Dynamomaschine.

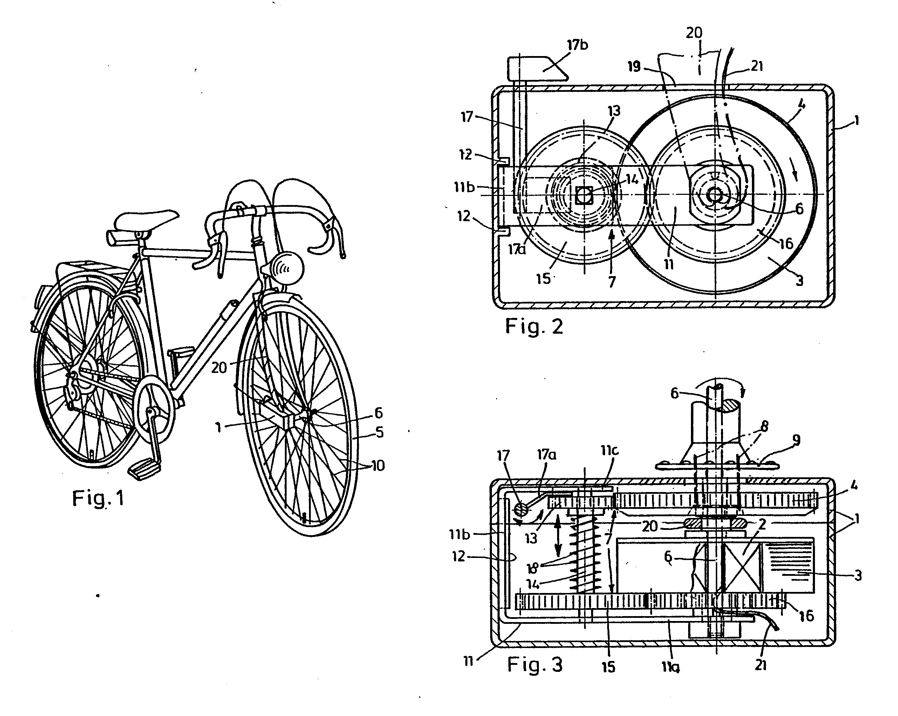

Nunmehr wird Bezug auf die Ausführung nach Fig. 2 und 3 genommen, bei der die Dynamomaschine mit ihrem Stator (2), Rotor (3) und Antriebsteil (4) koaxial zu der Radachse (6) angeordnet ist und die gesamte Dynamomaschine auf der Radachse (6) sitzt.

Als Getriebe (7) läßt sich in dem Gehäuse (1) ein Stirnradgetriebe, ein Kegelradgetriebe oder ein Planetengetriebe vorsehen, wobei das Antriebsteil (4) immer ein Teil dieses Getriebes bildet und mit dem Rad (5) im Bereich der Achse (6) verdrehfest verbunden ist.

Das bei dieser Ausführung als Zahnrad ausgeführte Antriebsteil (4) ist zentrisch auf die Radachse (6) geführt aufgesteckt und durch Mitnehmer (8) mit dem Rad (5) verbunden; als Mitnehmer (8) lassen sich beispielsweise Schrauben vorsehen, die in dem Nabenflansch (9) eingeschraubt werden oder aber es sind am Antriebsteil (4) Finger vorgesehen, die in den Nabenflansch (9) oder aber zwischen die Speichen (10) greifen.

Bei dem Ausführungsbeispiel nach Fig. 2 und 3 ist in dem Gehäuse (1) ein Stirnradgetriebe (7) vorgesehen und dabei ein U-förmiger, unterschiedlich lange U-Schenkel (11a, 11c) aufweisender Lagerbügel (11) um die Radachse (6) mit mindestens einem Schenkel (11a), vorzugsweise seinem längeren Schenkel, gelagert und in dem Gehäuse (1) verdrehfest gehalten; beispielsweise liegt der U-förmige Lagerbügel (11) mit seinem Steg (11b) zwischen zwei angeformten Leisten (12) im Gehäuse (1).

An dem kürzeren U-Schenkel (11c) des Lagerbügels (11) ist ein Abtriebszahnrad (13) drehbar gelagert, welches mit dem Antriebsteil (4) kämmt. Die Achse (14) des Abtriebszahnrades (13) ist bis zum längeren Schenkel (11a) hingeführt und auf dieser Achse (14) sitzt nahe dem Schenkel (11a) ein Übertragungszahnrad (15), welches mit einem Zahnrad (16) in Eingriff steht, das an oder um den Rotor (3) vorgesehen ist, so daß vom Antriebsteil (4) aus über das Abtriebszahnrad (13) und das Übertragungszahnrad (15) das Zahnrad (16) und somit der Rotor (3) verdreht wird und das in einem gewissen Übersetzungsverhältnis.

Das Abtriebszahnrad (13) ist mit der Achse (14) verdrehbar und gleichzeitig auf der Achse (14) verschiebbar gelagert, so daß es in der einen Verschiebestellung mit dem Antriebsteil (4) in Eingriff steht und in der zweiten Verschiebestellung außer Eingriff gebracht wird - diese Verschiebbarkeit des Abtriebszahnrades (13) ermöglicht ein Ein-und Ausschalten des Getriebes (7) und somit eine Drehbewegungsübertragung und -unterbrechung vom Rad (5) auf den Rotor (3). Die Verschiebung des Abtriebszahnrades (13) läßt sich durch einen aus dem Gehäuse (1) obenseitig herausragenden Dreh-oder Kipp-Hebel (17) durchführen, beispielsweise ist in Fig. 2 und 3 ein Drehhebel (17) dargestellt, der mit einer exzentrischen Lasche (17a) mit dem Abtriebszahnrad (13) in Verbindung steht und beim Verdrehen bewirkt diese Lasche (17a) eine Verschiebung des Zahnrades (13).

Am außerhalb des Gehäuses (1) liegenden Ende ist ein Betätigungsknopf (17b) am Drehhebel (17) vorgesehen.

Eine um die Achse (14) angeordnete Druckfeder (18) stützt sich zwischen den beiden Zahnrädern (13) und (15) ab und hält bzw. bringt das Zahnrad (13) in die eingeschaltete Getriebestellung.

Das Gehäuse (1) ist vorzugsweise zweigeteilt aus Kunststoff hergestellt und hat eine stromlinienförmige Formgebung. In dem Kunststoffgehäuse ist obenseitig eine Aussparung (19) vorgesehen, durch die eine Strebe der Radgabel (20) in die Dynamomaschine hineingreift und auf der Radachse festgelegt wird. Die Strebe der Radgabel (20) liegt dabei zwischen dem Antriebsteil (4) und dem Rotor (3).

21 bezeichnet ein elektrisches Kabel, welches vom Stator (2) aus aus der Dynamomaschine heraus, vorzugsweise durch die Aussparung (19) hindurchgeführt ist und für die Stromversorgung an die Beleuchtung des Fahrrades angeschlossen wird.

Durch die in das Gehäuse (1) eingreifende Radgabel (20) ist die gesamte Dynamomaschine gegen Verdrehung gesichert auf der Radachse (6) gehalten.

Es liegt im Rahmen der Erfindung, die Dynamomaschine auch außerhalb der Radachse (6), z. B. an der Radgabel (20) festzulegen, wobei dann auf der Radachse (6) das Antriebsteil (4) sitzt und das Abtriebszahnrad (13) dann ebenfalls mit dem Antriebsteil (4) in Verbindung steht. Bei dieser Ausführung würden dann der Stator (2) und Rotor (3) sowie das Zahnrad (16) nicht mehr koaxial zur Radachse (6), sondern exzentrisch dazu stehen.

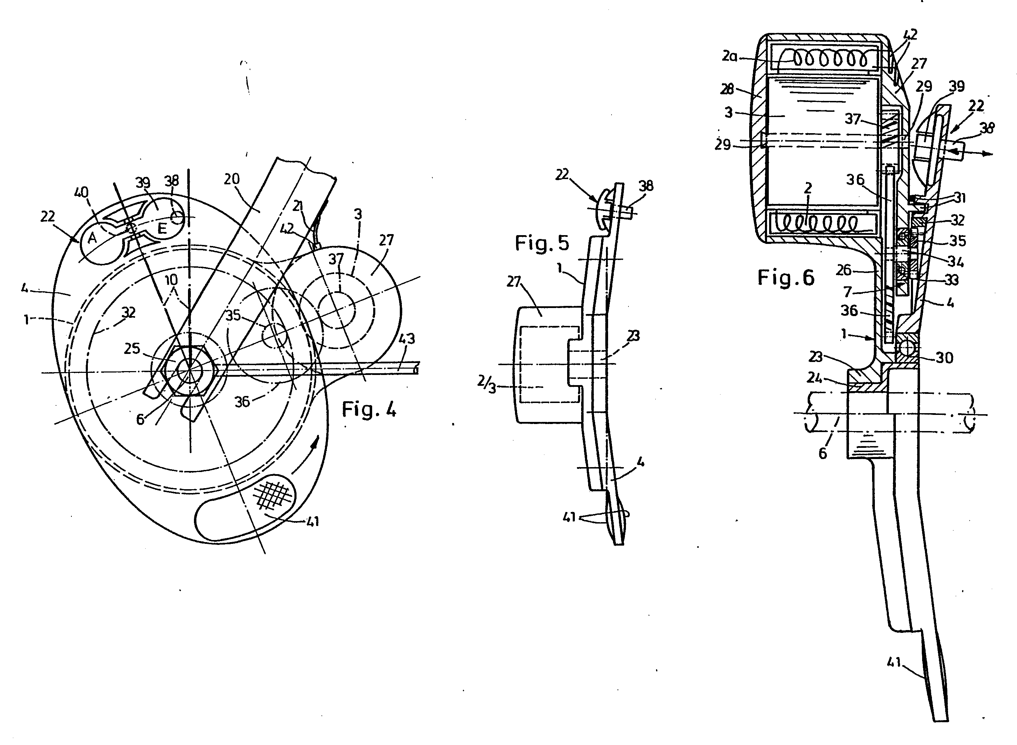

Bei dem weiteren Ausführungsbeispiel nach Fig. 4 bis 6, welches im Grundprinzip und in der Funktion dem ersten Ausführungsbeispiel entspricht, ist das Gehäuse (1) für das Getriebe (7) ebenfalls auf der Radachse (6) feststehend angeordnet, der Stator (2) und Rotor (3) liegen exzentrisch zur Radachse (6) im Gehäuse (1) und das Antriebsteil (4) ist von einem umlaufenden Gehäusedeckel gebildet, der über ein Ein-und Ausschaltorgan (22) mit dem Rad (5) bewegungsmäßig verbindbar und lösbar ist.

Das Gehäuse (1) bildet ein Aufnahmegehäuse für den Stator (2) und Rotor (3) und gleichzeitig für das Getriebe (7). Dabei hat dieses Gehäuse (1) eine Lagerbuchse (23), mit der es auf eine auf der Radachse (6) sitzende Aufnahmebuchse (24) aufgesteckt, vorzugsweise aufgepreßt, und durch die Radachsmutter (25) verdrehfest gehalten ist.

Um die Lagerbuchse (23) erstreckt sich ein koaxial zur Radachse (6) liegendes, schalenförmiges und in der Grundform kreisförmiges Gehäuseteil (26), an das sich ein exzentrisch zur Radachse (6) liegendes, topfartiges Gehäuseteil (27) mit Deckel (28) anschließt.

In dem topfartigen Gehäuseteil (27) lagert der Stator (2) mit Spule (2a) und ist der Rotor (3) untergebracht, der mit seiner Rotorwelle (29) einerseits in dem das Gehäuseteil verschließenden Deckel (28) und andererseits im Gehäuseteil (27) drehbar gelagert ist.

Das Antriebsteil (4) hat eine ovale Grundform, ist unter Zwischenschaltung eines Wälz-und/oder Gleitlagers (30) um die Aufnahmebuchse (24) drehbar gelagert und schließt das Gehäuseteil (26) mit einer umlaufenden Dichtung (31), wie Gummi-und Labyrinthdichtung, dicht ab.

An dem Antriebsteil (4) ist ein innenverzahnter Zahnkranz (32) befestigt, der vorzugsweise eine Geradverzahnung besitzt.

Im Gehäuseteil (26) ist unter Zwischenschaltung eines Wälz-und/oder Gleitlagers (33) eine Welle (34) gelagert, die ein mit dem Zahnkranz (32) kämmendes, vorzugsweise geradverzahntes Zahnrad (35) und ein koaxial dazu angeordnetes zweites Zahnrad (36) drehbar hält, wobei dieses zweite, größere Zahnrad (36) mit einem auf der Welle (29) des Rotors (3) sitzenden Zahnrad (37) in Eingriff steht. Die beiden Zahnräder (36, 37) sind vorzugsweise mit einer Schrägverzahnung ausgestaltet.

In/an einem Oval-Längenendbereich des Antriebsteiles (4) ist das Ein-und Ausschaltorgan (22) angeordnet, welches einen bolzenförmigen, etwa parallel zur Radachse (6) verlaufenden Mitnehmer (38) hat, der an einer im Antriebsteil (4) gelagerten Schaltwippe (39) mit Ein-und Ausschaltdrückern (E, A) befestigt ist, vorzugsweise am Einschaltdrücker (E) außerhalb der Schaltwippen-Schwenkachse lagert.

Der Mitnehmer (38) stellt die bewegungsmäßige Verbindung des Antriebsteiles (4) zu den Speichen (10) her und dadurch wird die Drehbewegung des Getriebes (7) durch das umlaufende Antriebsteil (4) eingeleitet. Durch Druck mit dem Finger auf den Einschaltdrücker (E) in axialer Richtung zur Radachse (6) wird der Mitnehmer (38) zwischen die Speichen (10) geschoben und beim Drehen des Rades (5) der Mitnehmer (38) mitgenommen und somit das Antriebsteil (4) verdreht.

Der sich mit dem Antriebsteil (4) drehende Zahnkranz (32) treibt das ortsfeste Zahnrad (35) an und dieses wiederum über die gemeinsame Welle (34) das Zahnrad (36), welches dann das auf der Rotorwelle (29) sitzende Zahnrad (37) und somit den Rotor (3) verdreht.

Das Getriebe (7) ist zweistufig ausgeführt und hat eine Übersetzung von z. B. $i_{ges}$ = 31.

Durch Druck mit dem Finger auf den Ausschaltdrücker (A) wird der Mitnehmer (38) aus den Speichen (10) herausgezogen und dann ist die Dynamomaschine vom Vorderrad (5) (von dessen Speichen 10) vollkommen getrennt.

Die jeweilige Schaltposition "Ein" bzw. "Aus" wird durch einen federbelasteten Raststift (40) od. dgl. in einer Rastkerbe arretiert.

An dem dem Ein-und Ausschaltorgan (22) gegenüberliegenden Oval-Längenendbereich des Antriebsteiles (4) ist ein Reflektor (41) angeordnet. Durch diesen Reflektor (41) und die vorzugsweise ebenfalls reflektierend ausgebildete Schaltwippe (39) entstehen zwei umlaufende Lichtpunkte, die zusätzlich zur Sicherheit des Fahrradfahrers beitragen.

Die Anschlußkabel der Dynamomaschine sind in Form von zwei Steckern (42) im feststehenden Gehäuse (1) (Gehäuseteil 27) eingelassen und werden mit den Stromkabeln (21) verbunden, die zum Vorder-und Rücklicht führen.

Die Aufnahmebuchse (24) hat die Aufgabe, die Dynamomaschine auf der Vorderradachse (5) verdrehfest und zentrisch zu positionieren.

Bei der Montage ist die Dynamomaschine bzw. die eingelassene Aufnahmebuchse (24) mit wenigen Handgriffen auf die Radachse (5) aufzustecken, zwischen Fahrradgabel (20) und der unteren Schutzblechhalterungsstange (43) zu justieren und danach mit der dafür vorgesehenen Mutter (25) der Vorderradachse (6) festzuziehen. Dabei sitzt die Dynamomaschine im Schutzbereich zwischen der Fahrradgabel (20) und den Speichen (10), ohne diese zu berühren (Fig. 4).

Die Ausbuchtung des feststehenden Gehäuses (1), nämlich das Gehäuseteil (27) für den Stator (2) und Rotor (3), bleibt innerhalb der Länge der vom Fahrradhersteller vorgegebenen Vorderradachse.

Das Gehäuse (1) und das Antriebsteil (4) sowie die Getriebe-Zahnräder (32, 35, 36, 37) bestehen aus Kunststoff.

In Fig. 6 ist das Antriebsteil (4) mit seinem Mitnehmer (38) in der verdrehten Stellung gezeichnet, wenn der Mitnehmer (38) im Bereich des Stators (2) und Rotors (3) liegt, also gegenüber Fig. 4 um 270° verdreht.

**Ansprüche**

1. Dynamomaschine für/an Fahrräder, mit einem am Fahrrad festlegbaren, einen Stator und einen Rotor aufnehmenden Gehäuse, wobei der Rotor von einem Antriebsteil in Drehbewegung versetzbar ist, welches von einem Fahrrad-Rad antreibbar ist, dadurch gekennzeichnet, daß um eine Radachse (6) ein Antriebsteil (4) mit dem Rad (5) bewegungsmäßig verbindbar drehbar gelagert ist, welches ein Teil eines den Rotor (3) in Abhängigkeit von der Raddrehung verdrehenden, ein-und ausschaltbaren Getriebes (7) der Dynamomaschine bildet.

2. Dynamomaschine nach Anspruch 1, dadruch gekennzeichnet, daß dieselbe mit ihrem Stator (2) und Rotor (3) sowie Antriebsteil (4) koaxial zu der Radachse (6) angeordnet ist.

3. Dynamomaschine nach den Ansprüchen 1 und 2, dadurch gekennzeichnet, daß das Antriebsteil (4) Teil eines Stirnradgetriebes, eines Kegelrad-Getriebes oder eines Planetengetriebes bildet.

4. Dynamomaschine nach den Ansprüchen 1 bis 3, dadurch gekennzeichnet, daß das von einem Zahnrad gebildete Antriebsteil (4) auf der Radachse (6) zentrisch lagert und durch Mitnehmer (8), wie in den Nabenflansch (9) eingreifende Schrauben oder in den Nabenflansch (9) oder zwischen die Speichen (10) fassende Finger, verdrehfest mit dem Rad (5) verbunden ist.

5. Dynamomaschine nach den Ansprüchen 1 bis 4, dadurch gekennzeichnet, daß das Getriebe (7) an einem in dem Gehäuse (1) verdrehfest gehaltene und um die Radachse (6) gelagerten Lagerbügel (11) ein mit dem Antriebsteil (4) in Eingriff stehendes und über ein Betätigungsteil (17) außer Eingriff bringbares Abtriebszahnrad (13) und ein koaxial dazu angeordnetes, mit dem Abtriebszahnrad (13) verdrehbar gekoppeltes Übertragungszahnrad (15) aufweist, welches mit einem am oder um den Rotor (3) fest angeordnetem Zahnrad (16) kämmt, wobei das Abtriebszahnrad (13) und das Übertragungszahnrad (15) auf einer gemeinsamen Welle (14) drehbar lagern und diese Welle (14) zwischen zwei unterschiedlich langen Schenkeln (11a, 11c) des Lagerbügels (11) gelagert ist und der Lagerbügel (11) mit seinem längeren Schenkel (11a) um die Radachse (6) lagert und mit seinem U-Steg (11b) zwischen angeformten Leisten (12) des Gehäuses (1) lagefixiert ist.

6. Dynamomaschine nach Anspruch 5, dadurch gekennzeichnet, daß das Abtriebszahnrad (13) auf der Welle (14) verschiebbar lagert und durch das von einem Dreh-oder Kipphebel gebildete Betätigungsteil (17) in die Getriebeein-bzw. Getriebeausschaltstellung bringbar ist, wobei zwischen Abtriebszahnrad (13) und Übertragungszahnrad (15) um die Welle (14) eine das Abtriebszahnrad (13) in der Getriebeeinschaltstellung haltende und in diese bringende Druckfeder (18) angeordnet ist.

7. Dynamomaschine nach einem oder mehreren der Ansprüche 1 bis 6, dadurch gekennzeichnet, daß dieselbe außerhalb der Radachse (6) an der Radgabel (20) mit ihrem Gehäuse (1) befestigt ist und das Abtriebszahnrad (13) mit dem auf der Radachse (6) sitzenden Antriebsteil (4) in Verbindung steht.

8. Dynamomaschine nach Anspruch 1, dadurch gekennzeichnet, daß der Stator (2) und Rotor (3) exzentrisch zur Radachse (6) im Gehäuse (1) gelagert sind.

9. Dynamomaschine nach Anspruch 8, dadurch gekennzeichnet, daß das Gehäuse (1) ein schalenförmiges, mit einer zentrischen Lagerbuchse (23) auf einer achsseitigen Aufnahmebuchse (24) verdrehfest lagerbares Gehäuseteil (26) und ein daran exzentrisch angeformtes, topfartiges Gehäuseteil (27) mit Deckel (28) für den Stator (2) und Rotor (3) aufweist und das Antriebsteil (24) von einem das schalenförmige Gehäuseteil (26) mit einer umlaufenden Dichtung (31), wie Gummi-und Labyrinthdichtung, abgedichtet überdeckenden, unter Zwischenschaltung eines Gleit-und/oder Wälzlagers (30) um die Radachse (6) drehbaren Gehäusedeckel gebildet ist.

10. Dynamomaschine nach den Ansprüchen 8 und 9, dadurch gekennzeichnet, daß in dem Antriebsteil (4) und dem Gehäuseteil (26) ein mehrstufiges, vorzugsweise zweistufiges, Getriebe (7) angeordnet ist, wobei in dem Antriebsteil (4) ein innenverzahnter Zahnkranz (32) festgelegt ist und in dem schalenförmigen Gehäuseteil (26) eine Welle (34) mittels Gleit-und/oder Wälzlager (33) drehbar lagert, die ein erstes, mit dem Zahnkranz (32) kämmendes Zahnrad (35) und ein zweites, mit einem auf der Rotorwelle (29) sitzenden Zahnrad (37) kämmendes Zahnrad (36) trägt.

11. Dynamomaschine nach den Ansprüchen 8 bis 10, dadurch gekennzeichnet, daß der Rotor (3) mit seiner Welle (29) einerseits im Gehäusedeckel (28) und andererseits mit dem Zahnrad (37) im Gehäuseteil (36) drehbar gelagert ist und die elektrischen Kabelanschlüsse von zwei im Gehäuseteil (27) eingelassenen Steckern (42) gebildet sind.

12. Dynamomaschine nach den Ansprüchen 8 bis 11, dadurch gekennzeichnet, daß das Antriebsteil (4) ein wippenartiges Ein-und Ausschaltorgan (22) mit einem bolzenförmigen, zwischen die Speichen (10) des Rades (5) zur Bewegungsübertragung schiebbaren Mitnehmer (38) aufweist, wobei das Ein-und Ausschaltorgan (22) in der ein-und in der ausgeschalteten Mitnehmerstellung durch eine Rasterung (40) arretiert ist.

13. Dynamomaschine nach den Ansprüchen 8 bis 12, dadurch gekennzeichnet, daß das Antriebsteil (4) eine ovale Grundform hat, in einem Oval-Längenendbereich des Ein-und Ausschaltorgan (22) aufnimmt und im anderen Oval-Längenendbereich einen Reflektor (41) trägt.

14. Dynamomaschine nach den Ansprüchen 1 bis 13, dadurch gekennzeichnet, daß das den Stator (2) und Rotor (3) sowie das Getriebe (7) aufnehmende Gehäuse (1) mindestens zweigeteilt ausgebildet ist, aus Kunststoff besteht und eine stromlinienförmige Formgebung hat.

Fig. 1

Fig. 2

Fig. 3

0 253 019

Fig. 6

Fig. 5

Fig. 4

Europäisches
Patentamt

**EUROPÄISCHER RECHERCHENBERICHT**

Nummer der Anmeldung

EP 86 11 4651

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 224 818 (CLEVER) <br> * Seite 1, Zeilen 1-6, Zeile 41 - Seite 2, Zeile 2; Seite 2, Zeilen 14-19,45-53,57-59,60-78; Figur 1 * | 1 | B 62 J 5/06 |
| A | | 3,4,7, 8,12 | |
| X | FR-A-1 274 615 (SOUBITEZ) <br> * Seite 1, Spalte 1, Zeilen 1-8, Zeile 18 - Spalte 2, Zeile 2; Figur 2; Seite 2, Spalte 2, Zeilen 13-18,37-40; Ansprüche 1-3 * | 1 | |
| A | | 2-4,7- 9,12 | **RECHERCHIERTE SACHGEBIETE (Int. Cl.4)** |
| X | DE-A- 681 248 (NEUMANN) <br> * Spalte 1, Zeilen 1-9, Zeile 17 - Spalte 2, Zeile 29; Spalte 2, Zeilen 33-38; Figuren 1,2; Spalte 3, Zeilen 33-45; Spalte 4, Zeilen 78-86 * | 1 | B 62 J |
| A | | 3,4,6- 8 | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 05-09-1987 | GEYER J.L. |

<table>
<tr><td colspan="3" align="center"><b>EINSCHLÄGIGE DOKUMENTE</b></td><td colspan="2">Seite 2</td></tr>
</table>

| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
|---|---|---|---|---|
| Y | FR-A- 855 264 (N.V. PHILIPS' GLOEILAMPENFABRIEKEN) * Seite 1, Spalte 1, Zeilen 1-6,13-30; Ansprüche 1c-e,g,2; Figuren 1,2 * | | 1 | |
| A | | | 2-4,6, 7,10 | |
| | --- | | | |
| Y | DE-A- 749 209 * Figuren 1,2; Spalte 1, Zeilen 1-5, Zeile 33 - Spalte 2, Zeile 1 * | | 1 | |
| A | | | 3,4,7, 8,10 | |
| | --- | | | |
| A | DE-A-3 241 909 (HÜBBERS) * Ansprüche 1,5-9,16; Figur 1 * | | 1-12 | RECHERCHIERTE SACHGEBIETE (Int. Cl.4) |
| | --- | | | |
| A | DE-A-3 236 211 (GEISLER) * Seite 6, Zeilen 17-25; Seite 7, Zeilen 15-24; Seite 8, Zeilen 8-17; Seite 10, Zeilen 1-16; Figuren 1,2; Ansprüche 1-8,10 * | | 1-7,10 | |
| | --- | | | |
| A | DE-A-3 216 900 (STEPPUHN) * Ansprüche 1-7; Figur 1 * | | 1-12 | |
| | ----- | | | |

Der vorliegende Recherchenbericht wurde für alle Patentansprüche erstellt.

| Recherchenort | Abschlußdatum der Recherche | Prüfer |
|---|---|---|
| DEN HAAG | 05-09-1987 | GEYER J.L. |